# EUROPEAN PATENT SPECIFICATION

(11) **EP 2 951 512 B1**
(45) Date of publication and mention of the grant of the patent: **30.03.2022**
(21) Application number: 13812243.7
(22) Date of filing: 25.11.2013
(51) Int. Cl.: F25B 5/02, F25D 29/00

(54) **MULTI-COMPARTMENT TRANSPORT REFRIGERATION SYSTEM WITH ECONOMIZER**
MEHRKAMMERTRANSPORTKÜHLSYSTEM MIT ECONOMIZER
SYSTÈME FRIGORIFIQUE DE TRANSPORT À COMPARTIMENTS MULTIPLES AYANT UN ÉCONOMISEUR

(30) Priority: 31.01.2013 US 201361758806 P
(43) Date of publication of application: 09.12.2015
(73) Proprietor: Carrier Corporation, Farmington, CT 06034 (US)
(72) Inventor: SENF, Raymond L., East Syracuse, New York 13057 (US); STOCKBRIDGE, Michael, East Syracuse, New York 13057 (US); REASON, John R., Syracuse, New York 13221 (US)
(74) Representative: Dehns
(86) International application number: PCT/US2013/071641
(87) International publication number: WO 2014/120332

(56) References cited:
- WO-A1-2008/094158
- WO-A1-2011/064927
- WO-A1-2013/134337
- US-A- 4 787 211

## Description

Embodiments relate generally to transport refrigeration systems, and more particularly to multi-compartment transport refrigeration systems using an economizer.

The refrigerated container of a truck trailer requires a refrigeration unit for maintaining a desired temperature environment within the interior volume of the container. A wide variety of products, ranging for example, from freshly picked produce to deep frozen seafood, are commonly shipped in refrigerated truck trailers and other refrigerated freight containers. To facilitate shipment of a variety of products under different temperature conditions, some truck trailer containers are compartmentalized into two or more separate compartments each of which will typically have a door that opens directly to the exterior of the trailer. The container may be compartmentalized into a pair of side-by-side axially extending compartments, or into two or more back-to-back compartments, or a combination thereof.

Conventional transport refrigeration units used in connection with compartmentalized refrigerated containers of truck trailers include a refrigerant compressor, a condenser, a main evaporator and one or more remote evaporators connected via appropriate refrigerant lines in a closed refrigerant flow circuit. The refrigeration unit must have sufficient refrigeration capacity to maintain the perishable product stored within the various compartments of the container at the particular desired compartment temperatures over a wide range of outdoor ambient temperatures and load conditions.

In addition to the afore-mentioned main evaporator, one or more remote evaporators, typically one for each additional compartment aft of the forward most compartment, are provided to refrigerate the air or other gases within each of the separate aft compartments. The remote evaporators may be mounted to the ceiling of the respective compartments or mounted to one of the partition walls of the compartment, as desired. The remote evaporators are generally disposed in the refrigerant circulation circuit in parallel with the main evaporator. Typically, a solenoid operated shut off valve is disposed in the refrigerant circulation circuit upstream of each of the remote evaporators in operation with a system controller so that each remote evaporator may be independently and selectively open and closed to refrigerant flow in response to the cooling demand of the respective compartment with which the respective remote evaporator is operatively associated. The same effect can be accomplished with independent stepper type control valves (rather than solenoid operated shut off valves) at the inlet of each evaporator coil.

Multiple temperature compartment transport refrigeration systems create significant control and refrigeration system complexity. Emissions requirements for cleaner diesel technology and/or engine power levels require a new approach to refrigeration cycle efficiency and power management. Typically, multiple temperature control of compartments is achieved by a pulse width modulation of an evaporator expansion valve of one or more perishable compartments, while an evaporator expansion valve for a frozen compartment is operating in full cool operation. This specific pulse width modulation control on a single stage compression system creates a dynamic power disruption from a rapid rise in suction pressure at the compressor due to the fact the saturated evaporation temperatures of all compartments are shared with common suction plenum.

WO 2008/094158 discloses a method for operating a transport refrigeration unit as in the pre-characterising portion of claim 1.

According to one aspect of the invention there is provided a multi-compartment transport refrigeration system comprising: a compressor having a suction port, a discharge port and an intermediate inlet port located at an intermediate location along a compression path between the compressor suction port and the compressor discharge port; a heat rejecting heat exchanger downstream of the compressor discharge port; an economizer heat exchanger having a first refrigerant flow path and a second refrigerant flow path therethrough; a first evaporator expansion device downstream of the first refrigerant flow path; a first evaporator having an inlet coupled to the first evaporator expansion device and an outlet coupled to a compressor inlet path, the compressor inlet path coupled to the compressor suction port, the first evaporator for cooling a first compartment of a container; a second evaporator expansion device downstream of the first refrigerant flow path; a second evaporator having an inlet coupled to the second evaporator expansion device and an outlet coupled to the compressor inlet path, the second evaporator for cooling a second compartment of the container; an economizer expansion device coupled to the first refrigerant flow path, the economizer expansion device directing refrigerant from the first refrigerant flow path to the second refrigerant flow path, the second refrigerant flow path coupled to the intermediate inlet port; an engine to provide power to the compressor; a controller controlling the economizer expansion device to regulate flow of refrigerant along the second refrigerant flow path to the intermediate inlet port characterised in that the controller controls the economizer expansion device in response to operating parameters of the engine.

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a perspective view, partly in section, of a refrigerated truck trailer having a compartmentalized container and equipped with a transport refrigeration unit having multiple evaporators in an exemplary embodiment;
FIG. 2 is a schematic representation of a multiple evaporator transport refrigeration unit in an exemplary embodiment; and
FIG. 3 is a flowchart of a method for controlling the multi-compartment refrigeration system in an exemplary embodiment.

The detailed description explains embodiments of the invention, together with advantages and features, by way of example with reference to the drawings.

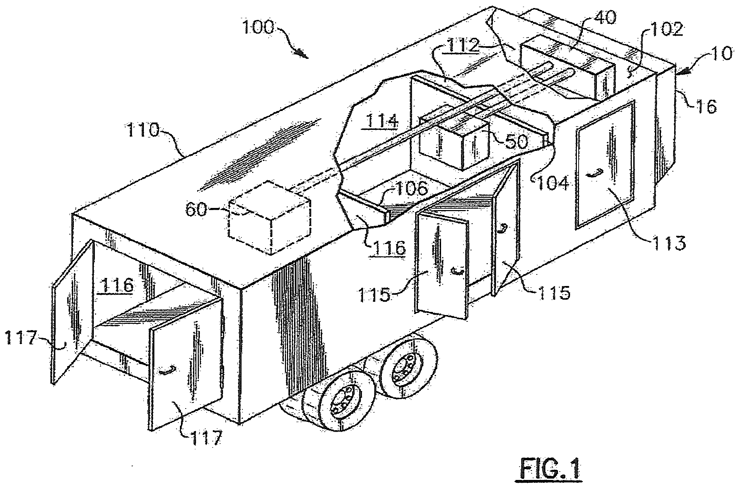

Referring now to FIG. 1, there is shown a truck trailer 100 having a refrigerated container 110 subdivided, i.e., compartmentalized, by internal partition walls 104, 106 into a forward cargo compartment 112, a central cargo compartment 114 and an aft cargo compartment 116. The cargo compartments 112, 114 and 116 have access doors 113, 115 and 117, respectively, which open directly to the exterior of the truck trailer to facilitate loading of product into the respective cargo compartments 112, 114 and 116. The container 100 is equipped with a transport refrigeration system 10 for regulating and maintaining within each of the respective cargo compartments 112, 114 and 116 a desired storage temperature range selected for the product being shipped therein. Although embodiments will be described herein with reference to the three compartment, refrigerated container, illustrated in FIG. 1, it is to be understood that embodiments may also be used in connection with truck trailers having compartmentalized containers with the cargo compartments arranged otherwise, and also in connection with other refrigerated transport vessels, including for example refrigerated container of a truck, or a refrigerated freight container of compartmentalized design for transporting perishable product by ship, rail and/or road transport.

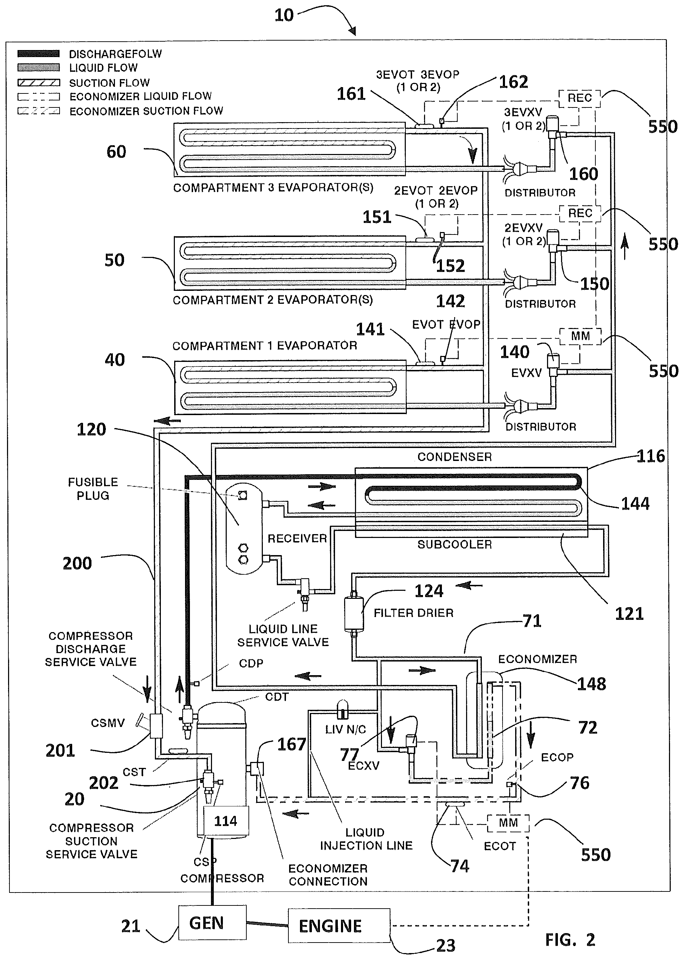

Transport refrigeration system 10 includes a main evaporator 40 and remote evaporators 50 and 60. Each of the evaporators 40, 50 and 60 may comprise a conventional finned tube coil heat exchanger. The transport refrigeration system 10 is mounted as in conventional practice to an exterior wall of the truck trailer 100, for example the front wall 102 thereof, with the compressor 20 and the heat rejecting heat exchanger 116 (FIG. 2) disposed externally of the refrigerated container 110 in a housing 16.

FIG. 2 is a schematic representation of the multiple evaporator transport refrigeration unit 10 in an exemplary embodiment. In the depicted embodiment, compressor 20 is a scroll compressor, however other compressors such as reciprocating or screw compressors are possible without limiting the scope of the disclosure. Compressor 20 includes a motor 114 which may be an integrated electric drive motor driven by a synchronous generator 21 operating at low speed (for example, 45 Hz) or high speed (for example, 65 Hz). Generator 21 may be driven by a diesel engine 23 of a vehicle that tows truck trailer 100. Alternatively, generator 21 may be driven by a stand-alone engine 23. In an exemplary embodiment, engine 23 a diesel engine, such as a four cylinder, 2200 cc displacement diesel engine which operates at a high speed (about 1950 RPM) or at low speed (about 1350 RPM).

High temperature, high pressure refrigerant vapor exits a discharge port of the compressor 20 then moves to a heat rejecting heat exchanger 116 (e.g., condenser or gas cooler), which includes a plurality of condenser coil fins and tubes 144, which receive air, typically blown by a heat rejecting heat exchanger fan (not shown). By removing latent heat through this step, the refrigerant condenses to a high pressure/high temperature liquid and flows to the receiver 120 that provides storage for excess liquid refrigerant during low temperature operation. From the receiver 120, the refrigerant flows to a subcooler 121, which increases the refrigerant subcooling. Subcooler 121 may be positioned adjacent heat rejecting heat exchanger 116, and cooled by air flow from the heat rejecting heat exchanger fan. A filter-drier 124 keeps the refrigerant clean and dry, and outlets refrigerant to a first refrigerant flow path 71 of an economizer heat exchanger 148, which increases the refrigerant subcooling. Economizer heat exchanger 148 may be a plate-type heat exchanger, providing refrigerant to refrigerant heat exchange between a first refrigerant flow path 71 and second refrigerant flow path 72.

From the first refrigerant flow path 71, refrigerant flows from the economizer heat exchanger 148 to a plurality of evaporator expansion devices 140, 150 and 160, connected in parallel with the first refrigerant flow path 71. Evaporator expansion devices 140, 150 and 160 are associated with evaporators 40, 50 and 60, respectively, to control ingress of refrigerant to the respective evaporators 40, 50 and 60. The evaporator expansion devices 140, 150 and 160 electronic expansion devices controlled by a controller 550. Controller 550 is shown as distributed for ease of illustration. It is understood that controller 550 may be a single device that controls the evaporator expansion devices 140, 150 and 160. Evaporator expansion device 140 is controlled by controller 550 in response to signals from a first evaporator outlet temperature sensor 141 and first evaporator outlet pressure sensor 142. Evaporator expansion device 150 is controlled by controller 550 in response to signals from a second evaporator outlet temperature sensor 151 and second evaporator outlet pressure sensor 152. Evaporator expansion device 160 is controlled by controller 550 in response to signals from a third evaporator outlet temperature sensor 161 and third evaporator outlet pressure sensor 162. Evaporator fans (not shown) draw or push air over the evaporators 40, 50 and 60 to condition the air in compartments 112, 114, and 116, respectively.

Refrigerant vapor from evaporators 40, 50 and 60 is coupled to a common compressor inlet path 200 coupled to a compressor suction port through a compressor suction modulation valve 201 and compressor suction service valve 202.

Refrigeration system 10 further includes a second refrigerant flow path 72 through the economizer heat exchanger 148. The second refrigerant flow path 72 is connected between the first refrigerant flow path 71 and an intermediate inlet port 167 of the compressor 20. The intermediate inlet port 167 is located at an intermediate location along a compression path between compressor suction port and compressor discharge port. An economizer expansion device 77 is positioned in the second refrigerant flow path 72, upstream of the economizer heat exchanger 148. The economizer expansion device 77 may be an electronic economizer expansion device controlled by controller 550. When the economizer is active, controller 550 controls economizer expansion device 77 to allow refrigerant to pass through the second refrigerant flow path 72, through economizer heat exchanger 148 and to the intermediate inlet port 167. The economizer expansion device 77 serves to expand and cool the refrigerant, which proceeds into the economizer counter-flow heat exchanger 148, thereby sub-cooling the liquid refrigerant in the first refrigerant flow path 71 proceeding to evaporator expansion devices 140, 150 and 160.

As described in further detail herein, many of the points in the refrigerant vapor compression system 10 are monitored and controlled by a controller 550. Controller 550 may include a microprocessor and its associated memory. The memory of controller can contain operator or owner preselected, desired values for various operating parameters within the system 10 including, but not limited to, temperature set points for various locations within the system 10 or the container, pressure limits, current limits, engine speed limits, and any variety of other desired operating parameters or limits with the system 10. In an embodiment, controller 550 includes a microprocessor board that contains microprocessor and memory, an input/output (I/O) board, which contains an analog to digital converter which receives temperature inputs and pressure inputs from various points in the system, AC current inputs, DC current inputs, voltage inputs and humidity level inputs. In addition, I/O board includes drive circuits or field effect transistors ("FETs") and relays which receive signals or current from the controller 550 and in turn control various external or peripheral devices in the system 10, such as economizer expansion valve 77, for example.

A number of refrigeration system loading events may cause the compressor power to exceed compressor power limits. For example, when evaporator expansion devices 140, 150 and/or 160 are pulsed, this can create a dynamic power disruption from a rapid rise in suction pressure at compressor 20 due to the fact the saturated evaporation temperatures of all compartments are shared with common suction plenum coupled to common compressor inlet path 200. The pulses applied to evaporator expansion devices 140, 150 and/or 160 may be pulse width modulation signals or may correspond to pulsing the evaporator expansion devices 140, 150 and/or 160 from an on state to off state, and vice versa. The disruptions (e.g., a spike in volume of refrigerant at the suction port of compressor 20) can cause the compressor to compensate and exceed compressor power limits. Other refrigeration system loading events include heater(s) and/or fan(s) cycling on and off within one or more compartments 112, 114 and 116. Embodiments use the economizer expansion valve 77 to maintain compressor power levels below a prescribed power limit by varying the injection gas flow rate from the second refrigerant flow path 72 to the intermediate inlet port 167 to maintain a given engine power level.

In operation, controller 550 may monitor superheat of the economizer heat exchanger 148 through an economizer heat exchanger outlet temperature sensor 74 and economizer heat exchanger outlet pressure sensor 76. A refrigeration system loading event, such as instantaneous pulses at evaporator expansion devices 140, 150 and/or 160 may cause a suction pressure rise at the suction port of compressor 20. This results in an increase in middle stage pressure at intermediate inlet port 167. This increases the pressure at economizer heat exchanger outlet pressure sensor 76, which is observed by controller 550 as reduced superheat. Controller 550 responds by reducing flow through or closing the economizer expansion valve 77 to maintain superheat of the economizer heat exchanger 148 at a desired level.

Controller 550 monitors engine operating parameters, such as engine speed and/or load on engine 23, and controls the economizer expansion valve 77 in response to the engine operating parameters, such as engine speed and/or engine load. The engine operating parameters may be sensed by sensors mounted at engine 23, in communication with controller 550. For example, controller 550 may detect that the engine 23 has dropped in RPM, indicating a step load on the compressor 20 due to one or more of refrigeration system loading events. In such a case, controller 550 may close or reduce flow through economizer expansion valve 77 to reduce the volume of refrigerant being supplied to compressor 20. Using operating parameters of engine 23 to control economizer expansion valve 77 may be performed alone, or in combination with the superheat control described herein.

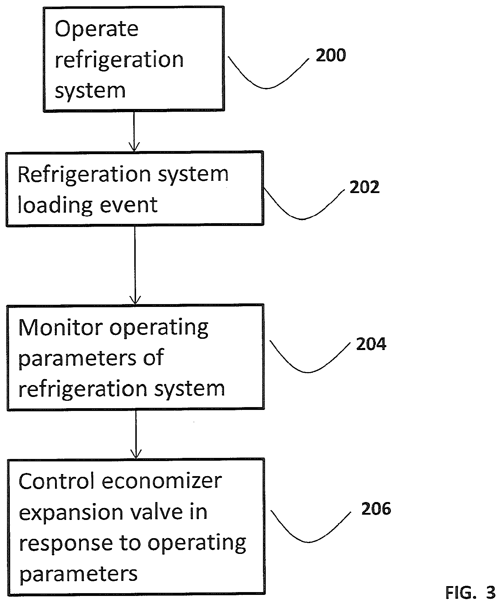

FIG. 3 is a flowchart of a method for controlling the multi-compartment refrigeration system in an exemplary embodiment. The process begins at 200 where the refrigeration system is operated to control temperature in the multiple compartments. At 202, a refrigeration system loading event occurs, such as one or more of the evaporator expansion devices 140, 150 and 160 being pulsed to control flow through the evaporator expansion device(s), heater(s) and/or fan(s) cycling on and off, etc. At 204, controller 550 monitors operating parameters of the refrigeration system. The operating parameters include operating parameters (e.g., speed and/or load) of engine 23. At 206, controller 550 controls that economizer expansion device 77 to adjust the flow of refrigerant to the intermediate inlet port 167 of compressor 20.

Using the economizer expansion valve 77 to control compressor power has numerous advantages. Control of the economizer expansion valve 77 is much faster acting than typical suction throttling regimes for single stage compressor systems. A typical reaction time for a compressor suction modulation valve 201 is 30-45 seconds from open to close. A typical reaction time for an economizer expansion device 77 (e.g., an electronically controlled stepper valve) is 6 seconds from open to close. Additionally, the refrigerant volume and mass in the economizer heat exchanger 148 is small, which tends to further increase reaction time and control by limiting stored refrigerant and subsequent energy.

Another benefit of the economized multi-temperature system is it allows for greater capacity from reduced pressure drop within the compartments and connecting tubing. Economized cycle capacity is driven by enthalpy and mass flow rate. To achieve the similar deep frozen capacity as a single stage system, enthalpy is increased in absence of mass flow rate. Typical mass flow rates of the economized scroll systems are 35-50% lower than single stage systems for same net capacity. Lower mass flow rate systems, such as that of FIG. 2, suffer less pressure drop effects from remote evaporator and line set losses. In addition, the economized cycle allows for smaller nominal low side piping diameter (e.g., 1 1/8" vs. 7/8") throughout the length (e.g., 53') of the trailer offering a significant installed cost savings.

Another benefit of the economized multi-temperature system is that it allows for variable sub-cooling to remote evaporators in times of need. When distributing subcooled refrigerant through multi-temperature compartments, it is helpful to maintain a net positive sub-cooling to the remote evaporators to prevent pre-expansion before expansion device. At certain times, refrigerant sub-cooling can be altered from heat gain through the individual compartments in which the refrigerant is passed through. By allowing for very light partial flow through the economizer system at low loads or high power demands, the system maintains a positive sub-cooling environment to the remote evaporator expansion valves, thereby improving performance.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A multi-compartment transport refrigeration system (10) comprising:
a compressor (20) having a suction port, a discharge port and an intermediate inlet port (167) located at an intermediate location along a compression path between the compressor suction port and the compressor discharge port;
a heat rejecting heat exchanger (116) downstream of the compressor discharge port;
an economizer heat exchanger (148) having a first refrigerant flow path (71) and a second refrigerant flow path (72) therethrough;
a first evaporator expansion device (140) downstream of the first refrigerant flow path;
a first evaporator (40) having an inlet coupled to the first evaporator expansion device and an outlet coupled to a compressor inlet path (200), the compressor inlet path coupled to the compressor suction port, the first evaporator for cooling a first compartment (112) of a container (110);
a second evaporator expansion device (150) downstream of the first refrigerant flow path;
a second evaporator (50) having an inlet coupled to the second evaporator expansion device and an outlet coupled to the compressor inlet path, the second evaporator for cooling a second compartment (114) of the container;
an economizer expansion device (77) coupled to the first refrigerant flow path, the economizer expansion device directing refrigerant from the first refrigerant flow path to the second refrigerant flow path, the second refrigerant flow path coupled to the intermediate inlet port;
an engine (23) to provide power to the compressor;
a controller (550) controlling the economizer expansion device to regulate flow of refrigerant along the second refrigerant flow path to the intermediate inlet port **characterised in that**
the controller controls the economizer expansion device in response to operating parameters of the engine.

2. The multi-compartment transport refrigeration system (10) of claim 1 wherein:
the controller (550) controls the economizer expansion device (77) in response to a refrigeration system loading event.

3. The multi-compartment transport refrigeration system (10) of claim 1 wherein:
the controller (550) controls the economizer expansion device (77) in response to a pulsed control signal applied to one of the first evaporator expansion device (140) and the second evaporator expansion device (150).

4. The multi-compartment transport refrigeration system (10) of claim 3 wherein:
the pulsed control signal is a pulse width modulation signal.

## Patentansprüche

1. Mehrkammern-Transportkühlsystem (10), umfassend:
einen Kompressor (20) mit einer Saugöffnung, einer Abgabeöffnung und einer Zwischeneinlassöffnung (167), die an einer Zwischenstelle entlang eines Kompressionspfads zwischen der Kompressorsaugöffnung und der Kompressorabgabeöffnung angeordnet sind;
einen wärmeabstoßenden Wärmetauscher (116) stromabwärts der Kompressorabgabeöffnung;
einen Ekonomiser-Wärmetauscher (148) mit einem ersten Kältemittelströmungspfad (71) und einem zweiten Kältemittelströmungspfad (72) dadurch;
eine erste Verdampferexpansionsvorrichtung (140) stromabwärts des ersten Kältemittelströmungspfads;
einen ersten Verdampfer (40) mit einem an die erste Verdampferexpansionsvorrichtung gekoppelten Einlass und einem an einen Kompressoreinlasspfad (200) gekoppelten Auslass, wobei der Kompressoreinlasspfad an die Kompressorsaugöffnung gekoppelt ist, wobei der erste Verdampfer zum Kühlen einer ersten Kammer (112) eines Behälters (110) ist;
eine erste Verdampferexpansionsvorrichtung (150) stromabwärts des ersten Kältemittelströmungspfads;
einen zweiten Verdampfer (50) mit einem an die zweite Verdampferexpansionsvorrichtung gekoppelten Einlass und einem an den Kompressoreinlasspfad gekoppelten Auslass, wobei der zweite Verdampfer zum Kühlen einer zweiten Kammer (114) des Behälters ist;
eine Economiser-Expansionsvorrichtung (77), die mit dem ersten Kältemittelströmungspfad gekoppelt ist, wobei die Economiser-Expansionsvorrichtung Kältemittel von dem ersten Kältemittelströmungspfad zu dem zweiten Kältemittelströmungspfad leitet, wobei der zweite Kältemittelströmungspfad mit der Zwischeneinlassöffnung gekoppelt ist;
einen Motor (23) zum Bereitstellen von Strom an den Kompressor;
eine Steuereinheit (550), welche die Economiser-Expansionsvorrichtung steuert, um den Kältemittelfluss entlang des zweiten Kältemittelflusspfads zu der Zwischeneinlassöffnung zu regulieren, **dadurch gekennzeichnet, dass**
die Steuereinheit die Economiser-Expansionsvorrichtung als Reaktion auf die Betriebsparameter des Motors steuert.

2. Mehrkammern-Transportkühlsystem (10) nach Anspruch 1, wobei: die Steuereinheit (550) die Economiser-Expansionsvorrichtung (77) als Reaktion auf ein Kühlsystem-Ladeereignis steuert.

3. Mehrkammern-Transportkühlsystem (10) nach Anspruch 1, wobei:
die Steuereinheit (550) die Economiser-Expansionsvorrichtung (77) als Reaktion auf ein gepulstes Steuersignal steuert, das an eine von der ersten Verdampferexpansionsvorrichtung (140) oder der zweiten Verdampferexpansionsvorrichtung (150) angelegt wird.

4. Mehrkammern-Transportkühlsystem (10) nach Anspruch 3, wobei:
das gepulste Steuersignal ein Pulsweitenmodulationssignal ist.

## Revendications

1. Système frigorifique de transport à compartiments multiples (10) comprenant :
un compresseur (20) présentant un orifice d'aspiration, un orifice de refoulement et un orifice d'entrée intermédiaire (167) situé à une position intermédiaire sur un circuit de compression entre l'orifice d'aspiration du compresseur et l'orifice de refoulement du compresseur ;
un échangeur de chaleur à rejet de chaleur (116) en aval de l'orifice de refoulement du compresseur ;
un échangeur de chaleur économiseur (148) comportant un premier circuit d'écoulement de fluide frigorigène (71) et un second circuit d'écoulement de fluide frigorigène (72) à travers celui-ci ;
un premier dispositif de détente d'évaporateur (140) en aval du premier circuit d'écoulement de fluide frigorigène ;
un premier évaporateur (40) présentant une entrée couplée au premier dispositif de détente d'évaporateur et une sortie couplée à un circuit d'entrée du compresseur (200), le circuit d'entrée du compresseur étant couplé à l'orifice d'aspiration du compresseur, le premier évaporateur étant destiné à refroidir un premier compartiment (112) d'un conteneur (110) ;
un second dispositif de détente d'évaporateur (150) en aval du premier circuit d'écoulement de fluide frigorigène ;
un second évaporateur (50) présentant une entrée couplée au second dispositif de détente d'évaporateur et une sortie couplée au circuit d'entrée du compresseur, le second évaporateur étant destiné à refroidir un second compartiment (114) du conteneur;
un dispositif de détente d'économiseur (77) couplé au premier circuit d'écoulement de fluide frigorigène, le dispositif de détente d'économiseur dirigeant un fluide frigorigène depuis le premier circuit d'écoulement de fluide frigorigène vers le second circuit d'écoulement de fluide frigorigène, le second circuit d'écoulement de fluide frigorigène étant couplé à l'orifice d'entrée intermédiaire ;
un moteur (23) destiné à fournir une puissance au compresseur ;
un dispositif de commande (550) commandant le dispositif de détente d'économiseur pour réguler l'écoulement de fluide frigorigène le long du second circuit d'écoulement de fluide frigorigène jusqu'à l'orifice d'entrée intermédiaire, **caractérisé en ce que**
le dispositif de commande commande le dispositif de détente d'économiseur en réponse à des paramètres de fonctionnement du moteur.

2. Système frigorifique de transport à compartiments multiples (10) selon la revendication 1, dans lequel : le dispositif de commande (550) commande le dispositif de détente d'économiseur (77) en réponse à un événement de chargement du système frigorifique.

3. Système frigorifique de transport à compartiments multiples (10) selon la revendication 1, dans lequel :
le dispositif de commande (550) commande le dispositif de détente d'économiseur (77) en réponse à un signal de commande pulsé appliqué à l'un parmi le premier dispositif de détente d'évaporateur (140) et le second dispositif de détente d'évaporateur (150).

4. Système frigorifique de transport à compartiments multiples (10) selon la revendication 3, dans lequel :
le signal de commande pulsé est un signal à modulation de largeur d'impulsions.
